(19) **Europäisches Patentamt**

**European Patent Office**

**Office européen des brevets**

(11) **EP 1 089 515 A2**

(12) **EUROPEAN PATENT APPLICATION**

(43) Date of publication:
04.04.2001 Bulletin 2001/14

(51) Int. Cl.[7]: **H04L 29/06**

(21) Application number: **00203151.6**

(22) Date of filing: **13.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **13.09.1999 US 153622 P**
**05.09.2000 US 655652**

(71) Applicant:
**Nortel Networks Limited**
**Montreal, Quebec H2Y 3Y4 (CA)**

(72) Inventor: **Morrow, Glenn**
**Plano, Texas 75075 (US)**

(74) Representative:
**Ertl, Nicholas Justin**
**Elkington and Fife,**
**Prospect House,**
**8 Pembroke Road**
**Sevenoaks, Kent TN13 1XR (GB)**

(54) **Call control server selection with load sharing mechanisms**

(57)    A system and method is provided for intelligently selecting a call control server (or call session control functions) from a plurality of call control servers, for processing calls in a telecommunications network. The disclosed method is an optimal solution for a connectionless packet network which uses a connectionless network protocol such as IP or OSI CLNP. The method uses network addresses as the only basis for assigning loads to different call session control functions. First, a network address translating device (NATD) is provided with a first network address shared by all the call control servers. Then, each call control server's work load is updated periodically, and an appropriate call control server is selected by the NATD for processing at least one packet for a communication transaction. The NATD may then identify a second network address for the selected call control server based on a predetermined load sharing mechanism, and only the first network address of the call control servers is known to the packet.

Fig. 1

## Description

Background of the Invention

The present invention relates generally to routing techniques for telecommunication systems, and more particularly, to a system and method for intelligently selecting a call control server for processing a call.

In a distributed processing communications switching system, a call is assigned to one of several different call control processors (CCP). The assigned CCP directs the establishment of various communications connections for that particular call. Typically, as it is known in the art, each such CCP is designated for the control of a fixed group of terminals in the switching system. Due to this design topology, capacity utilization is often a problem. For example, the overall system control capacity is wasted when some of the processors are significantly overloaded and some are significantly underloaded.

A pool of CCPs can be coordinated through network connections to form a call control processing center for more efficiently processing the calls. Usually, a call assignment processor (CAP) is in charge of load assignment to each CCP under its control. Various load sharing schemes have been disclosed for coordinating these pooled CCPs to improve the performance of call control processing.

According to many such load sharing schemes, a particular CAP is responsible for assigning calls for a group of directory numbers. Therefore, it is a precondition that the CAP may collect information on the directory numbers prior to the selection of any CCP. The information collection processes thus increase the load of the CAP.

Further, most of the call processing is "session based." For instance, a CCP is chosen for processing a call session and the CAP has to look at the session signaling protocols to carry out the load sharing assignments appropriately. This further increases processing load to the CAP itself.

In addition, once a CCP is chosen by the CAP to process a call session, it has to be anchored for the duration of the call. This is a significant waste of system resource per se.

A disadvantage of some known load-sharing call or session schemes is that a CAP has to terminate a specific signaling protocol used for a session prior to beginning a new session protocol.

Another disadvantage of using a CAP is that it must be duplicated in codes in conformity with each type of session signaling protocol.

A method is thus needed for enhancing system performance of a modern communications network system by implementing a more efficient and economical call control processing scheme.

Summary of the Invention

A system and method to improve the efficiency of call control load sharing mechanism among a group of call session control functions (CSCFs) or call control servers is provided by the present invention. In one embodiment, the disclosed method works with a connectionless packet network which uses a connectionless network protocol such as IP or OSI CLNP. The method uses network addresses as the only basis for assigning loads to different call session control functions. First, a network address translating device (NATD) is provided with a first network address shared by all the call control servers. Each call control server's work load is updated periodically, and an appropriate call control server is selected by the NATD for processing at least one packet for a communication transaction. The NATD then identifies a second network address for the selected call control server based on a predetermined load sharing mechanism, and only the first network address of the call control servers is known to the packet.

According to one embodiment of the present invention, the CSCFs can simply be accessed through a single network address. Incoming transactions need to be distributed to and load-shared upon known CSCFs. Each CSCF maps to a single process running on a computer, and multiple CSCF may run on a single computer since a single computer can have multiple IP addresses at any given instance. By requiring the NATD to be aware of the network address for a load sharing process only, the present embodiment eliminates the need for special CSCF address discovery and registration methods being sent over transport media.

Further, since most new call or session control protocols are semi-stateless and work on a transaction basis instead of call session basis, a call can be broken down into numerous transactions. With the call divided and processed by transactions, the call can be processed by different CSCFs at different times of the call. This feature is especially useful for wireless systems since it provides the advantage of having a wireless call to be handled by different administrative cellular systems if needed.

In addition, a service maintenance agent (SMA) may be installed. The SMA is dedicated to the provisioning of and operational status of the pool of any number of CSCFs.

Brief Description of the Drawings

Fig. 1 illustrates a basic access network model according to one example of the present invention.
Fig. 2 shows a schematic for an access network with interfaces among call session control functions (CSCFs), a service management agent, and a network address translator (NAT), whereas a route table is maintained therein with updated route information.

Fig. 3A presents a diagram for a predetermined load sharing scheme using a SIP session protocol.

Fig. 3B illustrates a diagram for a predetermined desired load sharing scheme using a H.225 session protocol.

Fig. 3C illustrates a diagram for a predetermined load sharing scheme using a SIGTRAN transport protocol.

Fig. 4 is a flow diagram illustrating process steps for choosing different load sharing mechanisms in the NAT of Fig. 2.

Fig. 5A illustrates a database structure according to one embodiment of the present invention by using a Round Robin load sharing mechanism.

Fig. 5B is a flow diagram showing one embodiment of the present invention by using a Round Robin load sharing routine.

Fig. 5C is a flow diagram showing another embodiment of the present invention by using a Round Robin load sharing routine.

Fig. 6A illustrates a database structure according to one embodiment of the present invention by using a weighted load sharing mechanism.

Fig. 6B is a flow diagram illustrating the implementation of the weighted load sharing mechanism of Fig. 6A.

Fig. 6C is a flow diagram illustrating a process for generating the database structure of Fig. 6A.

Fig. 7 is a flow diagram showing network address assignment for different messages of a transaction.

Fig. 8A is a flow diagram showing a process of the NAT detecting the service status of a CSCF.

Fig. 8B is a flow diagram illustrating a process done by the NAT when a CSCF has changed its load while applying a weighted load sharing routine.

Description of the Preferred Embodiment

Various examples of the present invention are described below with respect to call server applications. However, the present invention can also be used for any transaction-based client server applications over a connectionless network.

According to the present embodiment, call session control functions (CSCFs), also known as call control servers, are similar to CCPs, but they are not necessarily processors. A processor can have multiple CSCFs since each CSCF is an instance run by the processor to process a transaction. The disclosed method uses network addresses as the only basis for assigning processing loads to different CSCFs. Instead of using an independent call assignment processor (CAP) to take charge of the assignment, a network address translating device (NATD) such as a simple router having a network address translator (NAT) is used. The NAT performs the CSCF selection based solely on the network addresses of CSCFs, and does not have to probe into additional information such as session protocols, or to maintain any call state information, etc. Since the NAT is protocol independent, duplication of codes for different protocols encountered is no longer necessary.

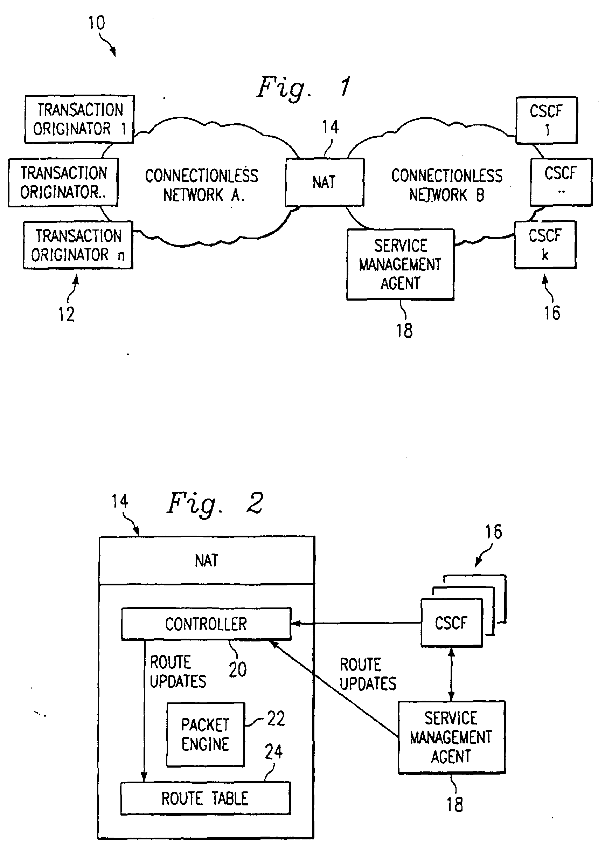

Referring now to Fig. 1, a typical access network 10 is shown according to one example of the present invention. For instance, at least one transaction originator 12 is connected to a connectionless network (e.g., network A), and further joins a routing device such as a router having a network address translator (NAT) 14. The NAT 14 further connects to at least one call session control function (CSCF) 16 through a call control center (or another connectionless network, e.g., network B). A service management agent (SMA) 18 is also connected to the NAT 14 and the CSCF 16 through network B. It is understood that the transaction originator 12 can be a CSCF 16, but also can be a session client server while using some particular network protocols. It is further noted that CSCFs 16 can be, but not limited to, H.323 Gatekeepers, SIP Proxy Servers, SIP Redirect Servers, SIP Robots, Media gateway controllers, Softswitches, Service Mediation Devices, Multimedia Conferencing Units, etc. When a transaction is initiated from the transaction originator 12, the NAT 14 is to allocate an available CSCF 16 to process the transaction based on status information of different CSCFs 16, which is updated by the SMA 18 periodically.

An access network using a connectionless network protocol (e.g., IP or OSI CLNP) works with the present invention. In such an access network as shown in Fig. 1, call or session control protocols are semi-stateless and work on a transaction basis. A simple example of a transaction is a call setup process or a call teardown process. Taking a typical cellular system as an example, a CCP used to be chosen to anchored for the entire duration of a call, thereby adding needless signal delay and wasting signaling network resources. With the teaching of the present invention, different CSCFs can be selected for processing different transactions. For example, if a call setup transaction of a mobile device occurs in a first administrative cellular system, and subsequently moves on to a second administrative cellular system, all transactions that happen under the first administrative cellular system can be processed by CSCFs associated therewith, and the transactions that happen under the second administrative cellular system can be processed by different CSCFs under the second administration cellular system. Furthermore, in the present invention, the NAT 14 does not have to maintain any call state information. This saves a significant amount of system resources and affords greater flexibility to the entire access network.

Referring to Fig. 2, a detailed schematic about some parts of the access network 10 of Fig. 1 is shown. Inside the NAT 14, there is a controller 20, a packet engine 22, and a route table 24. Both the SMA 18 and the CSCFs 16 communicate with the controller 20 from time to time, and the controller 20 updates the route table 24 based on new changes that happen in the network. The SMA 18 also communicates with the CSCFs 16 for obtaining the most updated load information of the CSCFs 16.

In the present embodiment, the NAT 14 of Fig. 2 only knows a single network address "C" representing all the CSCFs 16 to be load-shared. The router table 24 contains a route entry "I" for this single IP address. The route entry has a special field "f." This special field indicates how the destination address C should be address translated in a particular load-shared and distributed fashion, corresponding to a list of network addresses "L." Each of the network addresses in the list L points to a single CSCF 16. The list L can also be viewed as a sub-table of I. Also contained in the route entry is a field "n," representing the number of network addresses used for loadsharing purpose in this particular configuration. The primary function of the NAT 14 is to decide how to effectively assign the load to each CSCF 16 so that the overall efficiency of the system is maintained. The NAT 14 can identify different CSCFs 16 by their IP addresses or their link layer addresses depending on the network configuration.

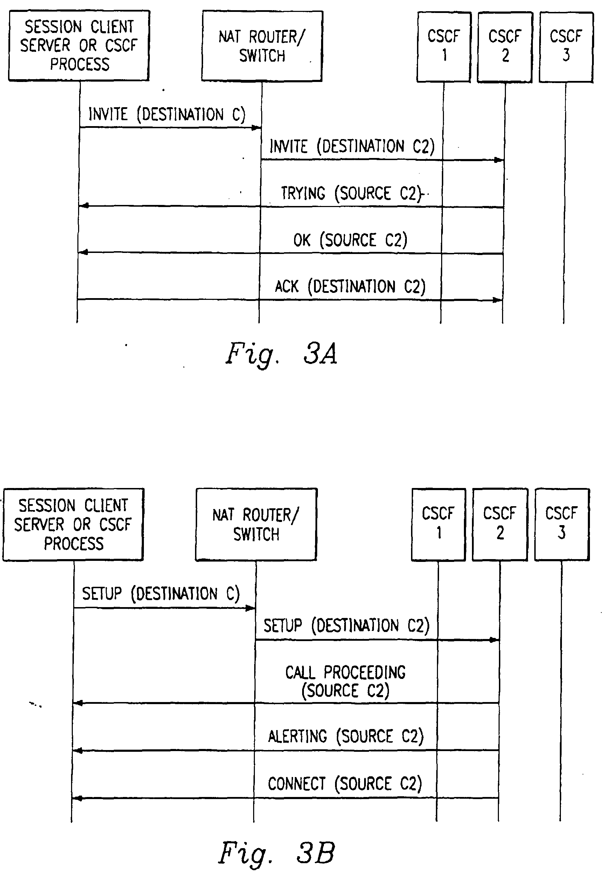

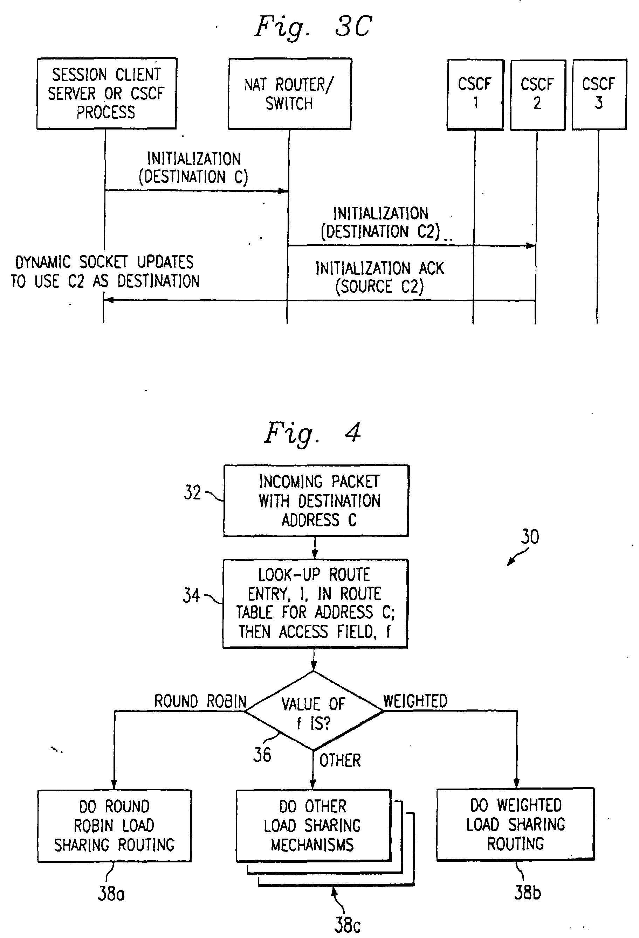

Figs. 3A, 3B and 3C axe examples of communication protocols conducted between a session client server or a CSCF process and a determined CSCF implemented with load sharing mechanisms by using a SIP session protocol, H:225 session protocol, or SIGTRAN transport protocol respectively. Common to all three examples, the session client communicates with the NAT 14 first, and the NAT sets up a connection with one of the CSCFs under control. Thereafter, the session client directly communicates with the designated CSCF. Again, it is understood that the mechanisms being applied will work for other session protocols such as Q.931, H.225, ISUP, QSIG, Megaco, MGCP, SGCP, H.248, etc.

Fig. 4 is a flow diagram 30 depicting a decision making process for the NAT 14 to decide which load sharing routine or mechanism is to be used, according to one example of the present invention. The flow diagram 30 is described with reference to Fig. 1 and Fig. 2. In step 32, when an incoming packet is detected with a destination address of C, the NAT 14 looks it up in the route table 24 in step 34 and finds the corresponding route entry I. It then accesses a particular field f in step 36 to determine what kind of load sharing routine should be applied. Predetermined values of f indicate different load sharing routines that are expected to be carried out. These predetermined load sharing routines or mechanisms may include a Round Robin load sharing routine, a weighted load sharing routine, or any other comparable routines. In the immediate example as shown in Fig. 4, if the f value indicates that a Round Robin routine is to be used, in step 38a, the Round Robin load sharing routine is carried out to perform the routing process. Similarly, if the f value indicates that a weighted load sharing routine is to be used in step 36, step 38b carries out the weighted load sharing routine for routing immediately. It is also indicated in Fig. 4 that other load sharing mechanisms can be conducted based on the f value in step 38c.

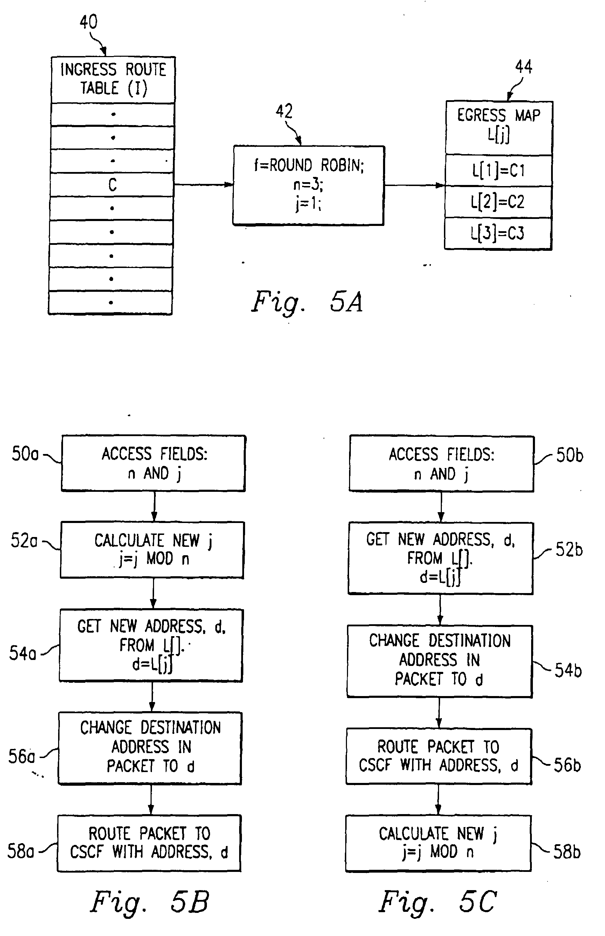

Figs. 5A, 5B and 5C illustrate the implementation of the Round Robin load sharing routine as shown in Fig. 4. By applying the Round Robin routine as illustrated below, the work load on the CSCFs 16 are efficiently allocated over a period of time by sequentially distributing the work load on the CSCFs 16 in a predetermined order. As shown in Fig. 5A, an ingress route table 40 may contain various route entry, one of which may be the above mentioned "C." The Round Robin load sharing routine is implemented by including a field, "j," in the route entry 42. The "j" value can be initialized to any number between 1 and "m" ("m" being a predetermined integer) when the route entry 42 is first added to the route table 40. It also contains a field "n" to indicate how many CSCFs are usable. When a packet with a destination network address C arrives at the NAT 14, the packet engine 22 searches the route entries using C as it's key. Once C is found in the route table, the packet engine 22 then looks at the f value contained therein to determine that it must perform a Round Robin process to find the j value. The packet engine 22 then uses the new value of j as the index to a sub-table or an egress map 44 to find the final destination address C1, C2 or C3 depending on the j value as shown in Fig. 5A.

Figs. 5B and 5C illustrate two detailed process flows to reach a final destination address for routing the packet. For example, in Fig. 5B, when the values of n and j are both accessed in step 50a, a new j value is calculated by conducting a $j=j \bmod (n)$ operation in step 52a. Using the obtained j value as an index, through the function $L[j]=[C1, C2, C3....]$ in the egress map 26 finds a final destination IP address "d" (e.g., d=C1) as shown in step 54a. The packet engine 22 then changes the address field of the received IP packet, which originally contains the value C, to the newly designated destination IP address d for a CSCF 16 (step 56a). Once the CSCF is identified, the packet is successfully routed in step 58a.

Fig. 5C represents a variation of Fig. 5B, in which some steps of the flow diagram are rearranged. For instance, step 50b is the same as steps 50a in Fig. 5B, but step 52b, 54b, and 56b perform the same function as steps 54a, 56a, and 58a respectively in Fig. 5B. Step 58b in Fig. 5C calculates the new j value as in step 52a of Fig. 5B. Hence, for the purpose of this example of the present invention, as shown in Figs. 5B and 5C, the calculation for the j value can occur either before or after routing the packet to a specific CSCF.

The Round Robin load sharing routine works well if the network is designed to simply distribute the load equally across all CSCFs 16 in the pool. The SMA 18 simply keeps track of which CSCFs 16 are provisioned, up or down, and signals the controller 20 of the NAT 14 to update it's route entries accordingly. In short, this approach achieves real-time CSCF scalability and redundancy at the same time.

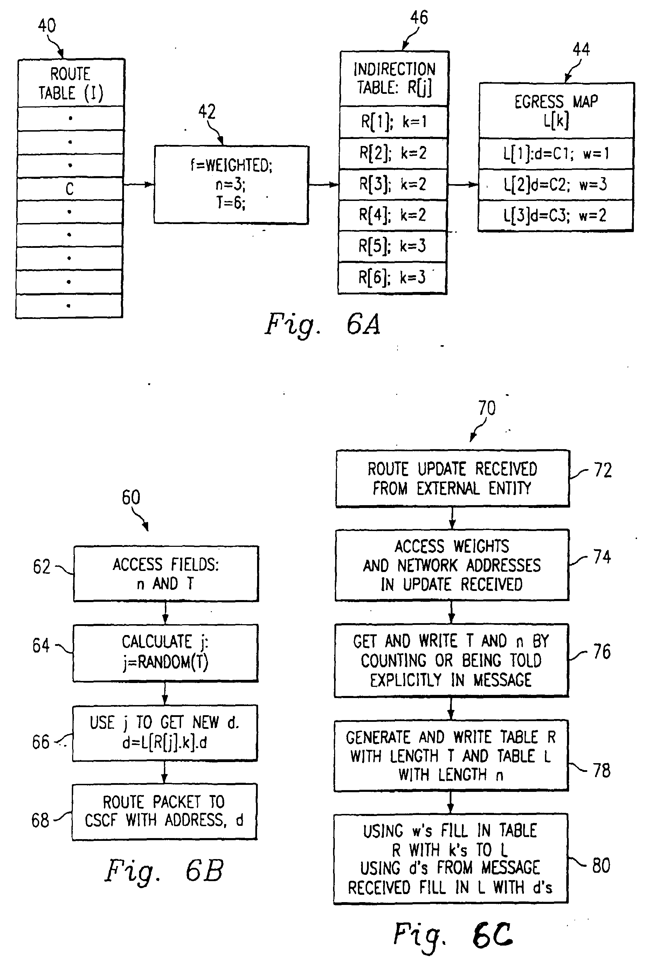

Another possible load sharing scheme is known as a weighted load sharing mechanism, which is shown in Figs. 6A, 6B, and 6C. The weighted load sharing routine is distinguished from the Round Robin method in the route entry, I, by a different value for the field f (as shown in block 40 and 42). Fig. 6A illustrates a database structure for using the weighted load sharing mechanism. Each entry of the egress map 44, as shown in Fig. 6A, has two (2) fields: one field represents the IP address d, and another contains a weight value w. The sum of all w's in the egress map must equal a known number T. In addition, the entry I contains an indirection sub-table 46, which is keyed by progressive summations of all w's. Each entry in this indirection sub-table 46 has an index "k" which further points to a corresponding instance of d in the egress map. For example, if k=1, L[k]=L[1] , d=C1 and w=1.

The flow diagram 60 as shown in Fig. 6B illustrates how a final CSCF is identified. Similar to the Round Robin method, when a packet with a destination address C arrives at the NAT 14, the packet engine 22 indexes the route entry I using C as it's key (as shown in block 40 of Fig. 6A). The packet engine 22 then, in step 62, accesses the f value to determine that it must perform a random number generation operation for a weighted load sharing routine with a scope value "T" (as shown in block 42 of Fig. 6A). It calculates the j value in step 64, and uses this value in conjunction with the indirection table 46 (of Fig. 6A) to obtain the IP address d of a particular CSCF in step 66. In specific, the j value is calculated by applying the function of $j=random(T)$ . The packet engine 22 uses the new value of j as an index to search for a particular k value in the indirection table 46 (Fig. 6A). The value of k is a pointer indicating an entry in an egress address sub-table or egress map 44 (Fig. 6A), which contains the IP address d of a CSCF 16. For example, if R[3] points at a k value of 2, then L[2] indicates an IP address d of C2 and a weight value w=3. The packet engine then changes the destination address field of the received IP packet to d and routes the packet, in step 68, accordingly to the designated CSCF which has the address of C2. The weight value w corresponds to the number of entries in the indirection table of a particular IP address in the egress map. For instance, if w equals to 3, then there are three entries: R[2], R[3], and R[4] in the indirection table 46 sharing a same value of k, which further points to an IP address of C2.

Referring now to Fig. 6C, a flow diagram 70 illustrates detailed steps taken for generating the database structure of Fig. 6A while using the weighted load sharing mechanism. In step 72, a route update message is received by the NAT 14 from a predetermined external entity. This route update message can be an automatic update message periodically sent by the external entity. It can also be a collection of messages sent by various network entities in a distributed network system. The NAT 14 accesses the information about the weights and network addresses in the route update message in step 74 to check on the load sharing status of each CSCF. The scope value T can be counted or can be explicitly given in the route update message. Hence, the scope value T and the number of CSCFs (e.g., as indicated by the field "n") are written to the route table 40. With all these done, in step 78, the indirection table 46 and the egress map 44 are created. The scope value T dictates the length of the indirection table, and the "n" value dictates the length of the egress map respectively.

Further in step 80, the indirection table is then filled with entries based on the weights (or the "w" value), and the egress map is filled with entries based on the indirection table and the addresses for the CSCFs in the route update message. For instance, if the weights are distributed as shown in the egress map 44, the CSCF represented by "C2" will have three corresponding entries in the indirection table (R[2], R[3], and R[4]). The route table 40, the indirection table 46, and the egress table 44 are all periodically updated when a new route update message is received based on the newly received weights for the CSCFs.

Moreover, the SMA 18 (Fig. 1) is also able to monitor the load of each CSCF 16 based upon inputs from or queries to the CSCFs 16. As the load changes, the SMA 18 can notify the controller 20 of the NAT 14 to update the route entries accordingly. An alternative to this is to have the CSCFs 16 periodically signal their load conditions to the controller 20 (Fig. 2) on the NAT 14. An agent running on the controller could also periodically query each CSCF 16 for this information.

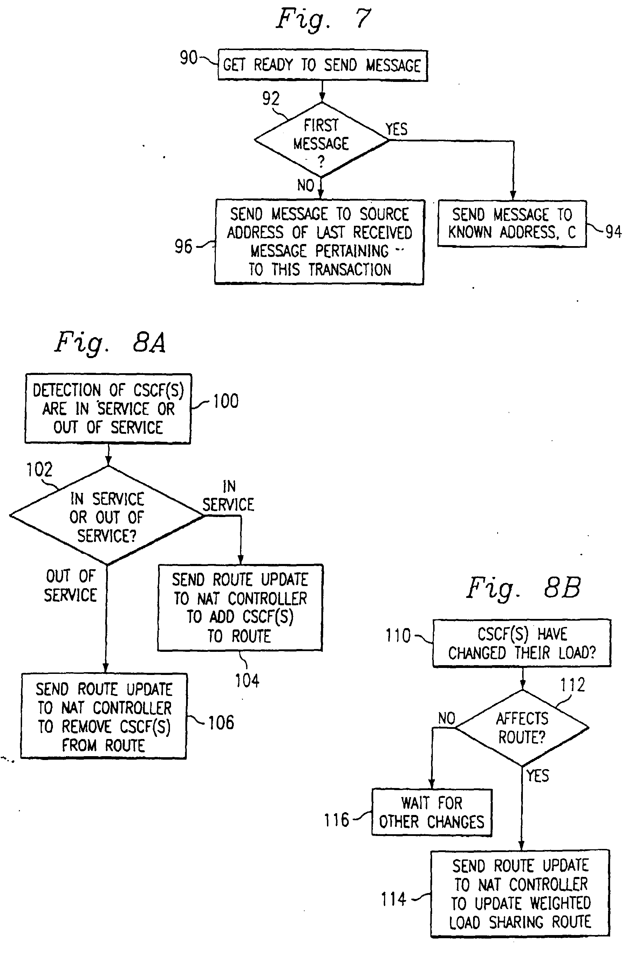

Fig. 7 is a flow diagram showing network address assignments for different messages of a transaction. A transaction may have a number of messages to be routed. When a message is sent by a transaction originator or a session client server in step 90, it is first checked by the NAT 14 to determine whether it is the first message of the transaction. If it is the first one (step 92), no prior load sharing routine has been performed, thus the message is sent to the network address C (step 94) so that the NAT 14 can carry out a chosen load sharing routine. If the message is not the first message of the transaction, a particular CSCF may have been chosen in a prior routing process done by the NAT 14 (including the load sharing processes). In this case, a previous handshake process has already happened between the CSCF and the transaction originator or the session client server. The network address of the CSCF can be obtained, in step 96, directly from the transaction originator or the session client, since in the previous handshake process the CSCF has informed the transaction originator about its network address.

According to the above example of the present invention, the CSCFs can simply be accessed through a single network address. Incoming transactions need to be distributed to and load-shared upon known CSCFs. Each CSCF maps to a single process running on a computer, and multiple CSCF may run on a single computer since a single computer can have multiple IP addresses at any given instance. By requiring the NAT 14 to be aware of the network address for a load sharing process only, the present example eliminates the need for special CSCF address discovery and registration methods being sent over transport media.

Figs. 8A and 8B are flow diagrams further illustrating communication processes among the CSCFs 16, the SMA 18, and the NAT 14 for the implementation of load sharing schemes in a network as shown in Fig. 2. Fig. 8A shows interfaces between the SMA 18 and the controller of the NAT 14 to determine whether a CSCF 16 is out of service, and updates the route table in the NAT 14 accordingly. In step 100, the service condition of each CSCF is detected. A determination is made in step 102, and if a CSCF operates under a normal condition, the controller 20 is updated to add such a CSCF to be considered for routing in step 104. Similarly, if the CSCF is dysfunctional, the controller is also updated in step 106 so that it can be excluded.

Fig. 8B illustrates interlaces between the SMA 18 and the NAT 14 to detect any load change in any CSCF 16 while applying the weighted load sharing routine. The loads of the CSCFs are constantly checked in step 110 to make the NAT 14 aware of changes. If there is a change in the load of a CSCF in step 112, and the NAT 14 decides that such a change in the CSCF 16 is so significant that the route table 24 should be updated, a route update message will be sent to the controller 20 in step 114. Otherwise, the SMA 18 will simply wait in step 116.

The above disclosure provides many different embodiments, or examples, for implementing different features of the invention. Also, specific examples of components, and processes are described to help clarify the invention. These are, of course, merely examples and are not intended to limit the invention from that described in the claims. For example, although the invention is specifically described with regard to call server applications, it can also be used for any transaction-based client server applications over a connectionless network.

While the invention has been particularly shown and described with reference to the preferred embodiment thereof, it will be understood by those skilled in the art that various changes in form and detail may be made therein without departing from the spirit and scope of the invention, as set forth in the following claims.

**Claims**

1. A method for intelligently selecting a call control server from a plurality of call control servers for processing calls in a telecommunications network, the network employing a connectionless network protocol, the method comprising the steps of:

   providing a network address translating device (NATD) with a first network address shared by all the call control servers;
   providing a service management agent for updating the NATD of each call control server's work load; and
   selecting an appropriate call control server for processing at least one packet for a communication transaction,
   wherein the NATD identifies a second network address for the selected call control server based on a predetermined load sharing mechanism, and wherein only the first network address of the call control servers is known to the packet.

2. The method of claim 1 further comprising changing a destination address of the packet for the communication transaction to the second network address.

3. The method of claim 1 wherein the step of selecting further includes the steps of:

   indicating the predetermined load sharing mechanism; and
   providing at least one necessary parameter for implementing the predetermined load sharing mechanism.

4. The method of claim 3 wherein the predetermined load sharing mechanism is a Round Robin load sharing mechanism which sequentially selects call control servers in a predetermined order.

5. The method of claim 4 wherein an available number of call control servers is provided to calculate the value of a first parameter, and wherein the first parameter is used as an index for identifying the selected call control server in an egress map stored in the NATD.

6. The method of claim 3 wherein the predetermined load sharing mechanism is a weighted load sharing mechanism and wherein a total number of available call control servers and a predetermined scope value are provided.

7. The method of claim 6 further includes the steps of:

   generating a random integer number based on the scope value;

using the generated integer number to identify a first index number in an indirection table stored in the NATD; and

using the first index number as a key to identify the selected call control server in an egress map stored in the NATD, wherein a plurality of entries in the indirection table are created and updated periodically based on the work load of each call control server as indicated in the egress map.

8. The method of claim 1 wherein the call control servers are connected through a computer network employing at least one connectionless network protocol.

9. The method of claim 1 wherein the service management agent periodically queries each call control server about its work load.

10. The method of claim 1 wherein each call control server reports periodically to the service management agent about its work load.

11. The method of claim 1 wherein the NATD is a router having a network address translator.

12. A method for intelligently selecting a control server among a plurality of control servers for processing a communication transaction in a telecommunications network, the network employing a connectionless network protocol, the method comprising:

providing a network address translator (NAT) with a first network address shared by all the control servers;

providing a service management agent for updating the NAT each control server's work load; and

selecting an appropriate control server for processing at least one packet for the communication transaction,

wherein the NAT identifies a second network address for the selected control server based on a predetermined load sharing mechanism, and wherein only the first network address of the control servers is known to the packet.

13. The method of claim 12 further comprising changing a destination address of the packet for the communication transaction to the second network address.

14. The method of claim 12 wherein the step of selecting further includes:

indicating the predetermined load sharing mechanism; and

providing at least one necessary parameter for implementing the predetermined load sharing mechanism.

15. The method of claim 14 wherein the predetermined load sharing mechanism is a Round Robin load sharing mechanism which sequentially selects call control servers in a predetermined order.

16. The method of claim 15 wherein an available number of control servers is provided to calculate the value of a first parameter, and wherein the first parameter is used as an index for identifying the selected control server in an egress map stored in the NAT.

17. The method of claim 14 wherein the predetermined load sharing mechanism is a weighted load sharing mechanism and wherein a total number of available control servers and a predetermined scope value are provided.

18. The method of claim 17 further includes:

generating a random integer number based on the scope value;

identifying a first index number in an indirection table stored in the NAT by using the generated integer number; and

using the first index number as a key to identify the selected control server in an egress map stored in the NAT,

wherein a plurality of entries in the indirection table are created and updated periodically based on the work load of each call control server as indicated in the egress map.

19. The method of claim 12 wherein the control servers are connected through a computer network employing at least one connectionless network protocol.

20. The method of claim 12 wherein the service management agent periodically queries each control server about its work load.

21. The method of claim 12 wherein each control server reports periodically to the service management agent about its work load.

22. A system for intelligently selecting a call control server among a plurality of call control servers for processing a communication transaction in a telecommunications network, the network employing a connectionless network protocol, the system comprising:

means for providing a network address translator (NAT) in a router with a first network address shared by all the call control servers;

a service management agent for updating the NAT each call control server's work load; and means for selecting an appropriate call control server for processing at least one packet for the communication transaction,

wherein the NAT identifies a second network address for the selected call control server based on a predetermined load sharing mechanism, and wherein only the first network address of the call control servers is known to the packet.

## Fig. 1

## Fig. 2

```
┌──────────────┐        ┌──────────┐          ┌────┐ ┌────┐ ┌────┐
│SESSION CLIENT│        │NAT ROUTER/│         │CSCF│ │CSCF│ │CSCF│
│SERVER OR CSCF│        │  SWITCH  │          │ 1  │ │ 2  │ │ 3  │
│   PROCESS    │        │          │          └────┘ └────┘ └────┘
└──────────────┘        └──────────┘
       │ INVITE (DESTINATION C)  │
       │────────────────────────▶│
       │                         │  INVITE (DESTINATION C2)
       │                         │─────────────────────────▶
       │                         │  TRYING (SOURCE C2)
       │◀────────────────────────│
       │                         │  OK (SOURCE C2)
       │◀────────────────────────│
       │                         │  ACK (DESTINATION C2)
       │────────────────────────────────────────────────▶
```

*Fig. 3A*

```
┌──────────────┐        ┌──────────┐          ┌────┐ ┌────┐ ┌────┐
│SESSION CLIENT│        │NAT ROUTER/│         │CSCF│ │CSCF│ │CSCF│
│SERVER OR CSCF│        │  SWITCH  │          │ 1  │ │ 2  │ │ 3  │
│   PROCESS    │        │          │          └────┘ └────┘ └────┘
└──────────────┘        └──────────┘
       │ SETUP (DESTINATION C)   │
       │────────────────────────▶│
       │                         │  SETUP (DESTINATION C2)
       │                         │─────────────────────────▶
       │                         │  CALL PROCEEDING
       │                         │     (SOURCE C2)
       │◀────────────────────────│
       │                         │  ALERTING (SOURCE C2)
       │◀────────────────────────│
       │                         │  CONNECT (SOURCE C2)
       │◀────────────────────────│
```

*Fig. 3B*

## Fig. 3C

```
┌──────────────┐   ┌──────────────┐      ┌──────┐ ┌──────┐ ┌──────┐
│ SESSION CLIENT│  │ NAT ROUTER/  │      │ CSCF │ │ CSCF │ │ CSCF │
│ SERVER OR CSCF│  │   SWITCH     │      │  1   │ │  2   │ │  3   │
│   PROCESS     │  │              │      └──────┘ └──────┘ └──────┘
└──────────────┘   └──────────────┘
```

INITIALIZATION
(DESTINATION C)

INITIALIZATION
(DESTINATION C2)

DYNAMIC SOCKET UPDATES          INITIALIZATION ACK
TO USE C2 AS DESTINATION          (SOURCE C2)

## Fig. 4

```
          ┌─────────────────────┐
   32 ~    │ INCOMING PACKET     │
          │ WITH DESTINATION    │
          │ ADDRESS C           │                         30
          └─────────────────────┘                          ↙
                    ↓
          ┌─────────────────────┐
   34 ~    │ LOOK-UP ROUTE       │
          │ ENTRY, I, IN ROUTE  │
          │ TABLE FOR ADDRESS C;│
          │ THEN ACCESS FIELD, f │
          └─────────────────────┘
                    ↓
  ROUND ROBIN  ◇ VALUE OF ◇  WEIGHTED
      ┌────────┤   f IS?   ├────────┐
      │        ◇──────────◇         │
      │          36  │ OTHER        │
      ↓              ↓              ↓
┌────────────┐ ┌────────────┐ ┌────────────┐
│ DO ROUND   │ │ DO OTHER   │ │ DO WEIGHTED│
│ ROBIN LOAD │ │ LOAD SHARING│ │ LOAD SHARING│
│ SHARING    │ │ MECHANISMS │ │ ROUTING    │
│ ROUTING    │ │            │ │            │
└────────────┘ └────────────┘ └────────────┘
      38a            │              38b
                    38c
```

40

INGRESS ROUTE
TABLE (I)

| . |
| . |
| . |
| C |
| . |
| . |
| . |
| . |

42

f=ROUND ROBIN;
n=3;
j=1;

44

EGRESS MAP
L[j]

| L[1]=C1 |
| L[2]=C2 |
| L[3]=C3 |

*Fig. 5A*

50a — ACCESS FIELDS:
n AND j

52a — CALCULATE NEW j
j=j MOD n

54a — GET NEW ADDRESS, d,
FROM L[j].
d=L[j]

56a — CHANGE DESTINATION
ADDRESS IN
PACKET TO d

58a — ROUTE PACKET TO
CSCF WITH ADDRESS, d

*Fig. 5B*

ACCESS FIELDS:
n AND j — 50b

GET NEW ADDRESS, d,
FROM L[j].
d=L[j] — 52b

CHANGE DESTINATION
ADDRESS IN
PACKET TO d — 54b

ROUTE PACKET TO
CSCF WITH ADDRESS, d — 56b

CALCULATE NEW j
j=j MOD n — 58b

*Fig. 5C*

40

**ROUTE TABLE (I)**

| |
|---|
| . |
| . |
| . |
| C |
| . |
| . |
| . |

42

f=WEIGHTED;
n=3;
T=6;

46

**INDIRECTION TABLE: R[j]**

| |
|---|
| R[1]; k=1 |
| R[2]; k=2 |
| R[3]; k=2 |
| R[4]; k=2 |
| R[5]; k=3 |
| R[6]; k=3 |

44

**EGRESS MAP L[k]**

| |
|---|
| L[1]:d=C1; w=1 |
| L[2]d=C2; w=3 |
| L[3]d=C3; w=2 |

*Fig. 6A*

60

62 — ACCESS FIELDS: n AND T

64 — CALCULATE j: j=RANDOM(T)

66 — USE j TO GET NEW d. d=L[R[j].k].d

68 — ROUTE PACKET TO CSCF WITH ADDRESS, d

*Fig. 6B*

70

ROUTE UPDATE RECEIVED FROM EXTERNAL ENTITY — 72

ACCESS WEIGHTS AND NETWORK ADDRESSES IN UPDATE RECEIVED — 74

GET AND WRITE T AND n BY COUNTING OR BEING TOLD EXPLICITLY IN MESSAGE — 76

GENERATE AND WRITE TABLE R WITH LENGTH T AND TABLE L WITH LENGTH n — 78

USING w's FILL IN TABLE R WITH k's TO L USING d's FROM MESSAGE RECEIVED FILL IN L WITH d's — 80

*Fig. 6C*

## *Fig. 7*

90 — GET READY TO SEND MESSAGE

92

FIRST MESSAGE ? — YES

NO

96 — SEND MESSAGE TO SOURCE ADDRESS OF LAST RECEIVED MESSAGE PERTAINING ·· TO THIS TRANSACTION

SEND MESSAGE TO KNOWN ADDRESS, C — 94

## *Fig. 8A*

DETECTION OF CSCF(S) ARE IN SERVICE OR OUT OF SERVICE — 100

102

IN SERVICE OR OUT OF SERVICE?

IN SERVICE

OUT OF SERVICE

SEND ROUTE UPDATE TO NAT CONTROLLER TO ADD CSCF(S) TO ROUTE

104

SEND ROUTE UPDATE TO NAT CONTROLLER TO REMOVE CSCF(S) FROM ROUTE — 106

## *Fig. 8B*

110 — CSCF(S) HAVE CHANGED THEIR LOAD?

112

NO — AFFECTS ROUTE? — YES

116 — WAIT FOR OTHER CHANGES

114 — SEND ROUTE UPDATE TO NAT CONTROLLER TO UPDATE WEIGHTED LOAD SHARING ROUTE